# EUROPÄISCHE PATENTANMELDUNG

(11) **EP 3 573 076 A1**
(43) Veröffentlichungstag der Anmeldung: **27.11.2019**
(21) Anmeldenummer: 19000320.2
(22) Anmeldetag: 19.05.2016
(51) Int. Cl.: H01B 3/40, C08G 59/62, C08L 63/00, C08G 59/24, C08G 59/68, C09D 163/00

(54) **FESTER, INSBESONDERE BANDFÖRMIGER, ISOLATIONSWERKSTOFF, FORMULIERUNG FÜR EIN IMPRÄGNIERMITTEL ZUR HERSTELLUNG EINES ISOLATIONSSYSTEMS IN EINEM VAKUUMIMPRÄGNIERVERFAHREN DAMIT UND MASCHINEN MIT DERARTIGEM ISOLATIONSSYSTEM**

(30) Priorität: 17.07.2015 DE 102015213537
(62) Teilanmeldung aus: 16724877.2
(71) Anmelder: Siemens Aktiengesellschaft, 80333 München (DE)
(72) Erfinder: Huber, Jürgen, 91058 Erlangen (DE); Schirm, Dieter, 96149 Breitengüßbach (DE); Übler, Matthias, 92289 Ursensollen (DE)

(57) **Zusammenfassung**

Die Erfindung betrifft einen festen Isolationswerkstoff, der der zusammen mit einer Formulierung eines Imprägniermittels zur Herstellung eines Isolationssystems in einem Vakuumimprägnierprozess einsetzbar ist, wobei der Isolationswerkstoff einen Träger, einen Barrierewerkstoff aus plättchenförmigem Glimmer, einen ersten ionisch-wirkenden Härtungskatalysator und einen Bandkleber umfasst, wobei der Bandkleber in Form eines Epoxy-Novolaks und/oder Epoxy-Phenol-Novolaks mit Funktionalitäten n= 0,1 bis 8 vorliegt und inert ist gegenüber dem ersten Härtungskatalysator, der in Form einer Supersäure und/oder eines Supersäurenderivats vorliegt und unter den Bedingungen der Vakuumimprägnierung mit cycloaliphatischen Epoxidgruppen eines Imprägniermittels wie es in der Formulierung des Imprägniermittels enthalten ist, mit Gelierzeiten von 1 bis 15 h, bevorzugt 2 bis 12 h, besonders bevorzugt 2,5 bis 10h bei einer Imprägniertemperatur reagiert.

## Beschreibung

Die Erfindung betrifft einen festen, insbesondere bandförmigen, Isolationswerkstoff, Formulierung zur Herstellung eines Isolationssystems in einem Vakuumimprägnierverfahren damit und Maschinen mit derartigem Isolationssystem, insbesondere für den Mittel- und Hochspannungsbereich, nämlich für Mittel- und Hochspannungsmaschinen, insbesondere rotierende elektrische Maschinen im Mittel- und Hochspannungsbereich sowie Halbzeuge für elektrische Schaltanlagen.

Elektrische Maschinen (Motoren, Generatoren) haben in der Vielzahl ihrer Längsnuten des Ständerblechpakets speziell geartete Spulenwicklungen oder Leiterstäbe, i.d.R. aus Kupfer oder einem anderen, hoch-leitfähigen, Material.

Im Falle eines elektrischen Motors, wird durch zeitlich selektive Bestromungen ein ringsum propagierendes Magnetfeld erzeugt, welches den in der Bohrung des Ständers aufgehängten und frei drehenden Rotor, welcher z.B. aufgrund einer Vielzahl an applizierten Permanentmagneten auf das induzierte Magnetfeld in Form von erzwungener Rotation reagiert, antreibt und so elektrische Energie in Bewegungsenergie umwandelt. Das Blechpaket liegt dabei elektrisch auf Masse, die Spulen hingegen auf hohem Kilovoltpotential. Die in die Statornuten eingepassten Spulen müssen demnach gegen Erdpotential elektrisch isoliert werden. Dazu wird eine jede Spule mit einem speziellen glimmerbasierenden Band (sog. Glimmerband) mehrfach und definiert-überlappt isoliert.

Glimmer wird verwendet, da es als partikel-, insbesondere als plättchenförmiger, anorganischer Barrierewerkstoff die elektrische Erosion unter elektrischen Teilentladungen wirkungsvoll und lange, beispielsweise über die gesamte Lebensdauer der Maschine, oder des Generators zu retardieren vermag und gute chemische sowie thermische Beständigkeit aufweist. Glimmerbänder bestehen aus Glimmerpapier und einem oder mehreren Trägern, z.B. Gewebe, Folie(n), die über einen Bandkleber miteinander verbunden sind. Glimmerbänder sind nötig, da Glimmerpapier allein nicht die für einen Isolationsprozess nötige mechanische Festigkeit aufweist. Je nach Anwendung können dem Bandkleber weitere Additive zugegeben sein, z.B. Beschleunigersubstanzen, die initiierend auf die thermische Härtung eines extern beaufschlagten Imprägniermittels wirken: nachdem die mit Glimmerband isolierten Spulen in die Ständerblechpakete eingepasst und elektrisch geschaltet sind, wird zur Vermeidung von Teilentladungen während des späteren Betriebs die Luft in den Hohlräumen der Wicklungen und insbesondere in den Nutspalten des Ständerblechpakets eliminiert. Da dieser Abstand von bestromter, isolierter Spule zum Blechpaket in der Regel so klein wie möglich gehalten wird, sind dort Feldstärken von mehreren kV/mm keine Seltenheit. Dementsprechend wird das Isolationsmaterial beansprucht.

Als Isolationsmaterial haben sich thermisch härtbare Epoxidharz/Anhydridgemische für Vakuumimprägnierprozesse als geeignet erwiesen, weil sie zur Flutung der aus ihren Einzelteilen zusammengesetzten Statoren der elektrischen Maschinen mit den eingepassten und glimmerbandisolierten Spulen eingesetzt werden. Während eines speziellen Vakuumimprägnierprozesses, dem VPI(vacuum pressure impregnation)-Verfahrens werden diese Statoren bislang im Ganzen mit einer dünnflüssigen Epoxidharz-Phtalsäureanhydrid-Formulierung in einer Vakuumkammer geflutet und anschließend unter Druckbeaufschlagung imprägniert.

Abhängig vom Zusammenspiel zwischen Beschleuniger im Glimmerband und Imprägniermittel kann es bereits während der Imprägnierphase zu einer Gelierung des in die Glimmerbandisolation eingedrungenen Imprägniermittels aus Epoxidharz-Phtalsäureanhydrid kommen. Die Endaushärtung erfolgt im Regelfall unter Normaldruck im Industrieofen. Dabei kommt dem Härtungskatalysator im Glimmerband, im Fachjargon auch Beschleuniger, respektive Bandbeschleuniger genannt, die Aufgabe zu, das applizierte Imprägniermittel aus Epoxidharz und Phtalsäureanhydrid in einer gewünschten Zeit bei einer definierten Temperatur zu gelieren und zu härten. Als industrieller Standard in elektrischen Maschinen hat sich als Imprägniermittel eine Mischung aus destilliertem Bisphenol-A-Diglycidylether und Methylhexahydrophtalsäureanhydrid etabliert, eine sehr dünnflüssige Formulierung, die in Abwesenheit von Beschleunigersubstanzen eine gewünscht lange Lagerstabilität bei Imprägniertemperatur aufweist (z.B. Verdopplung der dynamischen Anfangsviskosität erst nach mehreren Wochen), jedoch bei Anwesenheit eines Beschleunigers rasch zum Hochpolymeren reagiert. Da jedoch das mit Bandkleber und Bandbeschleuniger versehene Glimmerband ebenso eine hinreichend lange Lagerstabilität aufweisen sollte, sind im festen Isolationswerkstoff Bandkleber und Härtungskatalysator bevorzugt möglichst inert zueinander.

Insbesondere ist vorteilhaft, wenn alle drei Komponenten, also Bandkleber, Härtungskatalysator und beaufschlagtes Imprägniermittel erst im Moment des Zusammentreffens während des VPI-Prozesses miteinander reagieren. So erreicht man bestmögliche Vernetzung sowie Anbindung, Kompatibilität und Lunkerfreiheit der Isolation, was wiederum zu einer optimierten Lebensdauer der beim Härten im Anschluss entstehenden "Hauptisolation" der elektrischen Maschine führt.

Als Imprägniermittel wird bislang ein Epoxidharz-Phtalsäureanhydridgemisch eingesetzt. Als im festen Isolationswerkstoff befindlicher Härtungskatalysator werden bislang, bei Säureanhydrid-haltigen Imprägnierharzen, beispielsweise Übergangsmetallsalze organischer Säuren und/oder substituierter Amine, wie beispielsweise Zinknaphtensäuresalze eingesetzt. Dabei liegen in der Regel die Glasübergangstemperaturen der substituierten Aminderivate höher als die der Übergangsmetallsalze.

Das Arbeitsprinzip der Generatoren ist invers zu dem der Motoren. Durch mechanische Energie (Brennstoffverbrennung in Kraftwerken mit Turbinenantrieb, durch Wasserkraft etc.) wird der in der Bohrung befindliche Rotor angetrieben, der seinerseits in den Statorspulen elektrische Ströme induziert, die ihrerseits nach Synchronisation in das Netz eingespeist werden. Somit liegt auch hier das Blechpaket elektrisch auf Masse, die Spulen hingegen auf hohem Kilovoltpotential. Da Generatoren allerdings sehr große elektrische Maschinen mit hohen Nennspannungen (in der Regel höher als bei Motoren) darstellen, sind die Glimmerbandwicklungen in den Statorspulen oftmals um ein Vielfaches häufiger gewickelt als in den üblicherweise kleineren elektrischen Motoren, um die Feldstärken in einem akzeptablen Bereich zu halten. Die Durchtränkung all dieser Glimmerbandlagen stellt dabei hohe Anforderungen an die dynamische Viskosität des Imprägniermittels im VPI-Prozess.

Auch werden imprägnierte, aber noch unvernetzte Generatorstatoren häufig rollierend geliert und gehärtet, damit die vollständige Durchtränkung aller Glimmerband-Lagen, beispielsweise in Summe bis zu einem Zentimeter, an jedem Statorstab gewährleistet ist. Schon allein deshalb sind die geforderten Gelierzeiten beim Generatorbau deutlich länger als beim VPI-Prozess elektrischer Motoren. Entsprechend ist es vorteilhaft, wenn der Härtungskatalysator so gewählt ist, dass eine hinreichend lange Gelierphase bei der Generatorherstellung gewährleistet ist. Dabei sollte der Härtungskatalysator trotzdem reaktionsenthalpisch leicht genug handhabbar sein und somit bei der Reaktion zum Polymeren weniger Wärme freisetzen als beispielsweise ein für die Motorenherstellung geeigneter Bandbeschleuniger.

Wegen der toxikologischen Bedenken gegen uneingeschränkte Verwendung von Phtalsäureanhydriden werden in Zukunft phtalsäureanhydridfreie oder überhaupt anhydridfreie Imprägniermittel auf Epoxidbasis Verwendung finden, die unter Einsatz von Härtungskatalysatoren polymerisiert werden.

Trotz der hierbei bevorzugten Verwendung des destillierten Bisphenol-F-Diglycidylethers als Basis für das anhydridfreie Imprägniermittel, wie aus den älteren Anmeldungen DE 102014219844.5; DE 102014221715.6; DE 102015205328.8, DE 102015202053.3; DE 102015204885.3, deren Offenbarungsgehalt hiermit zum Inhalt der vorliegenden Beschreibung gemacht wird, bekannt, ist für manche Anwendungen die geforderte Durchtränkbarkeit von - beispielsweise - Generatorstatorstäben die dynamische Viskosität dieses anhydridfreien Imprägniermittels unzureichend. Auch ist bekannt, dass die Glasübergangstemperaturen ionisch-gehärteter Epoxidharze des Typs Bisphenol-A-Diglycidylether hinzu Bisphenol-F-Diglycidylether stetig abnehmen.

Entsprechend ist es Aufgabe der Erfindung, einen festen Isolationswerkstoff für die Verwendung zusammen mit einer Formulierung für ein Imprägniermittel zur Herstellung eines Isolationssystems im VPI-Prozess anzugeben, der lagerstabil und darüber hinaus grundsätzlich Säureanhydrid-frei ist.

Dementsprechend ist Gegenstand der vorliegenden Erfindung ein fester Isolationswerkstoff, der zusammen mit einer Formulierung eines Imprägniermittels zur Herstellung eines Isolationssystems in einem Vakuumimprägnierprozess einsetzbar ist, wobei der Isolationswerkstoff einen Träger, einen Barrierewerkstoff aus plättchenförmigem Glimmer, einen ersten ionisch-wirkenden Härtungskatalysator und einen Bandkleber umfasst, wobei der Bandkleber in Form eines Epoxy-Novolaks und/oder Epoxy-Phenol-Novolaks mit Funktionalitäten n= 0,1 bis 8 vorliegt und inert ist gegenüber dem ersten Härtungskatalysator, der in Form einer Supersäure und/oder eines Supersäurenderivats vorliegt und unter den Bedingungen der Vakuumimprägnierung mit cycloaliphatischen Epoxidgruppen eines Imprägniermittels aus cycloaliphatischem Epoxidharz mit Gelierzeiten von 1 bis 15 h, bevorzugt 2 bis 12 h, besonders bevorzugt 2,5 bis 10h bei einer Imprägniertemperatur reagiert.
Der feste Isolationswerkstoff ist geeignet, von einer Formulierung für ein Imprägniermittel in einem VPI-Verfahren zur Herstellung eines Isolationssystems durchtränkt zu werden, wobei das Imprägniermittel entsprechend niedrigviskos ist, mit einer Viskosität von kleiner 1500 mPas, bevorzugt kleiner 500 mPas, besonders bevorzugt kleiner 150 mPas bei Imprägniertemperatur, dadurch gekennzeichnet, dass das Imprägnierharz ein cycloaliphatisches Epoxidharz ist, das mit dem im festen Isolationswerkstoff deponierten ersten Härtungskatalysator und/oder in der Formulierung des Imprägniermittels verteilten zweiten Härtungskatalysator reagiert, wobei der erste Härtungskatalysator ("Bandbeschleuniger"), der vom festen Isolationswerkstoff stammt, sehr reaktiv auf die cycloaliphatischen Epoxidgruppen des cycloaliphatischen Epoxidharzes in der Formulierung des Imprägniermittels reagiert, aber gegenüber den funktionellen Gruppen des ebenfalls im festen Isolationswerkstoff enthaltenen Bandklebers ausreichend reaktionsträge ist, damit die Lagerstabilität des festen Isolationswerkstoffes gegeben ist, wobei der zweite Härtungskatalysator ("Badbeschleuniger") erst bei höheren Temperaturen, beispielsweise bei über 100°C, anspringt, so dass die Formulierung des Imprägniermittels ausreichende Lagerstabilität hat.

Ein cycloaliphatisches Epoxidharz nach der vorliegenden Erfindung hat zumindest eine Oxiranfunktionalität in zumindest einem Cycloaliphaten.

Nach einer bevorzugten Ausführungsform umfasst das Epoxidharz zur Ausbildung einer netzartigen Struktur bei der Härtung bevorzugt mindestens zwei cycloaliphatische Ringe, wobei - wiederum bevorzugt, beide zumindest eine Oxiranfunktionalität tragen.

So ist Gegenstand der vorliegenden Erfindung ein fester Isolationswerkstoff, der zusammen mit der Formulierung des Imprägniermittels zur Herstellung eines Isolationssystems in einem Vakuumimprägnierprozess einsetzbar ist, wobei dieser einen Träger, einen Barrierewerkstoff, einen ersten Härtungskatalysator und einen Bandkleber umfasst, wobei der Bandkleber inert ist gegenüber dem ersten Härtungskatalysator, der unter den Bedingungen der Vakuumimprägnierung mit den cycloaliphatischen Epoxidgruppen eines cycloaliphatischen Epoxidharzes, wie es in der Formulierung des Imprägniermittels enthalten ist, mit Gelierzeiten von 1 bis 15h, bevorzugt 2 bis 12, besonders bevorzugt 2,5 bis 10h bei Imprägniertemperatur reagiert.

Weiterhin ist die Verwendung des so hergestellten Isolationssystems in elektrischen Maschinen, bevorzugt rotierende elektrische Maschinen, besonders bevorzugt rotierende elektrische Maschinen im Mittel- und Hochspannungsbereich sowie in elektrischen Schaltanlagen, Mittel- und Hochspannungsanwendungen, Durchführungen, Transformatordurchführungen, Generatordurchführungen und/oder HGÜ-Durchführungen, sowie in entsprechenden Halbzeugen Gegenstand der Erfindung.

Schließlich sind noch elektrischen Maschinen, bevorzugt rotierende elektrische Maschinen, besonders bevorzugt rotierende elektrische Maschinen im Mittel- und Hochspannungsbereich sowie elektrische Schaltanlagen, Mittel- und Hochspannungsanwendungen, Durchführungen, Transformatordurchführungen, Generatordurchführungen und/oder HGÜ-Durchführungen, sowie entsprechende Halbzeuge, die ein derartiges Isolationssystem umfassen, Gegenstand der Erfindung.

Nach einer vorteilhaften Ausführungsform liegt im festen Isolationswerkstoff ein Träger in Form von Gewebtem, wie z.B. Glasfasergewebe, nicht Gewebtem ("non-woven"), wie z.B. Vlies, insbesondere ein Polyestervlies, Papier und/oder Folie vor. Dabei kann der Träger in Form einer Folie auch perforiert sein.

An, in und/oder auf diesem Träger befindet sich im festen Isolationswerkstoff der, bevorzugt partikelförmige, Barrierewerkstoff.

Der Barrierewerkstoff liegt bevorzugt zumindest zum Teil plättchenförmig vor. Insbesondere kann beispielsweise Glimmer als Barrierewerkstoff eingesetzt werden.

Nach einer vorteilhaften Ausführungsform liegt im festen Isolationswerkstoff ein Bandkleber in Form eines Glycidyl-etherepoxid-Harzes mit Repetiereinheiten von n = 0 bis n = 50, bevorzugt von n = 1 bis n = 30, besonders bevorzugt von n = 2 bis n = 18 vor.

Nach einer vorteilhaften Ausführungsform liegt der Bandkleber in Form eines Epoxy-Novolaks und/oder Epoxy-Phenol-novolake mit Funktionalitäten n= 0,1 bis 8 vor.

Der Bandkleber verbindet den zumindest einen Träger und den Barrierewerkstoff im festen Isolationswerkstoff, des Isolationssystems. Er ist im festen Isolationswerkstoff in einer Menge im Bereich von 1 bis 30 Gew%, bevorzugt 2 bis 15 Gew%, besonders bevorzugt 5 bis 10 Gew% enthalten.

Nach einer vorteilhaften Ausführungsform der Erfindung liegt der erste Härtungskatalysator ("Band-Härtungskatalysator oder auch Bandbeschleuniger genannt") im festen Isolationswerkstoff in einer Konzentration von 0,001 Gew% bis 7,5 Gew%, beispielsweise im Bereich von 0,001 bis 5 Gew%, insbesondere von 0,001 Gew% bis 2 Gew%, und bevorzugt von 0,001 Gew% bis 1 Gew%, vor, so dass Gelierzeiten von mehreren Stunden realisierbar sind.

Nach einer Ausführungsform ist ein zweiter Härtungskatalysator ("Bad-Härtungskatalysator") mit einer Anspringtemperatur von, beispielsweise, >100°C, bevorzugt >120°C, besonders bevorzugt >140°C in der Formulierung enthalten.

Dieser zweite Härtungskatalysator ist bevorzugt in einem Gehalt von 0 Gew% - 10 Gew%, insbesondere von 0.01 bis 7.5 Gew% und insbesondere bevorzugt in einem Gehalt von 0.1 bis 5 Gew%, bezogen auf das cycloaliphatische Epoxidharz, in der Formulierung für das Imprägniermittel enthalten.

Vorzugsweise sind der erste und der zweite Härtungskatalysator ionisch-wirkende Härtungskatalysatoren. Die beiden Härtungskatalysatoren können gleichzeitig aber jeder der Härtungskatalysatoren kann auch allein vorliegen. So kann ein Isolationssystem allein unter Verwendung des ersten und allein unter Verwendung des zweiten Härtungskatalysators hergestellt sein, vorzugsweise wird ein Isolationssystem aber unter Verwendung des ersten Härtungskatalysators und insbesondere bevorzugt wird das Isolationssystem unter Verwendung beider Härtungskatalysatoren hergestellt sein.

Nach einer vorteilhaften Ausführungsform der Erfindung wird vorgeschlagen, dass die Auswahl der jeweiligen oxiranhaltigen Komponenten, im festen Isolationswerkstoff der Bandkleber einerseits und in der Formulierung das Imprägnierharz andererseits enthalten sind, so getroffen wird, dass unterschiedliche Oxiranspezies gewählt werden.

Beispielsweise wird ein 1,2 endständiges Oxiran als Bandkleber mit einem cycloaliphatischen Oxiran als Imprägnierharz beim Vakuumimprägnierprozess kombiniert. So kann beispielsweise als Bandkleber ein auf 1,2-Oxiran-Epoxidharzgruppen basierendes Material, wie ein kettenverlängertes Epoxidharz mit n ≥ 1 und/oder höherfunktionale Epoxy-Phenol-Novolake, eingesetzt werden.

Als - erster - Härtungskatalysator, der im festen Isolationswerkstoff vorgesehen ist, eignet sich beispielsweise eine Supersäure, insbesondere eine thermisch-aktivierbare Supersäure, die eine kationische, thermische getriebene Gelierung und des cycloaliphatisches Oxiran-Epoxidharzes während des Vakuumimprägnierprozesses initiiert.

Nach einer vorteilhaften Ausführungsform der Erfindung initiiert der erste Härtungskatalysator die Polymerisation des Imprägnierharzes, des cycloaliphatisches Epoxidharzes bei Temperaturen im Bereich von 20°C bis 100°C, bevorzugt von 50°C bis 80°C und insbesondere bevorzugt von 55°C bis 75°C. Die niedrigste Anspringtemperatur des zweiten Härtungskatalysators kann sich auch direkt an die höchste Anspringtemperatur des ersten Härtungskatalysators anschließen.

Nach einer vorteilhaften Ausführungsform liegen in der Formulierung des Imprägniermittels ein Füllstoff und/oder Additive vor.

Nach einer vorteilhaften Ausführungsform der Formulierung liegt ein Füllstoff in Form von Nanopartikel vor. Dabei kann es insbesondere vorteilhaft sein, wenn die Nanopartikel dispergiert vorliegen.

Nach einer weiteren vorteilhaften Ausführungsform der Erfindung liegen die Nanopartikel in Form von polymeren Nanopartikel vor.

Nach einer weiteren Ausführungsform der Erfindung liegen die Nanopartikel in der Formulierung mit einem Partikeldurchmesser von 5 nm bis 300 nm, insbesondere mit einem Partikeldurchmesser von kleiner 150 nm vor.

Nach einer weiteren Ausführungsform der Erfindung liegen die Nanopartikel in der Formulierung in einem Gehalt von 0.1 bis 35 Gew% vor.

Insbesondere zur fehlerarmen Imprägnierung großer Generatorstatoren sind äußerst dünnflüssige Imprägniermittel notwendig.

Da destillierter Bisphenol-A-Diglycidylether für gewöhnlich eine dynamische Viskosität von ca. 4500 mPa·s bei Raumtemperatur aufweist, ist eine Erniedrigung auf die notwendigen 25-50 mPa·s durch Temperaturanhebung fertigungstechnisch nicht realisierbar. Die Umstellung auf destillierten Bisphenol-F-Diglycidylether mit einer dynamischen Raumtemperaturviskosität von ca. 1500 mPa·s und ionischer Polymerisation ist demnach zweckdienlich, wie bereits in den folgenden deutschen nationalen Patentanmeldungen erwähnt, deren Offenbarungsgehalt hiermit zum Inhalt der vorliegenden Beschreibung gemacht wird: DE 102014219844.5; DE 102014221715.6; DE 102015205328.8; DE 102015202053.3; DE 102015204885.3.

Wie aus den DE 102014219844.5; DE 102014221715.6; DE 102015205328.8, DE 102015202053.3 und der DE 102015204885.3 bekannt ist, ist eine ionische Polymerisation anhydridfreier, destillierter 1,2-Oxiran-Epoxidharze, z.B. der Typen Bisphenol-A-Diglycidylether und/oder Bisphenol-F-Diglycidylether, zweckdienlich. Für große elektrische Maschinen mit besonders vielen und damit schwierig zu durchtränkenden Glimmerbandlagen ist jedoch ein besonders niedrigviskoses, also dünnflüssiges, Imprägniermittel nötig, das zudem sehr langsam geliert, um die vollständige Durchdringung zu gewährleisten. Der erste Härtungskatalysator im Glimmerband liegt demnach vorteilhafterweise in besonders geringer Konzentration vor, um Gelierzeiten von mehreren Stunden zu induzieren.

Gleichzeitig werden erste Härtungskatalysatoren bevorzugt, bei denen die Glasübergangstemperatur des gehärteten Imprägniermittels im Isolationssystem größer 110°C, bevorzugt größer 130°C, besonders bevorzugt größer 150°C ist.

Insbesondere latent wirkende Supersäuren, beispielsweise Säuren mit einem pKs-Wert kleiner -3, ermöglichen Imprägniermittel mit hohen Glasübergangstemperaturen, gänzlich ohne Anhydridhärter-Komponente.

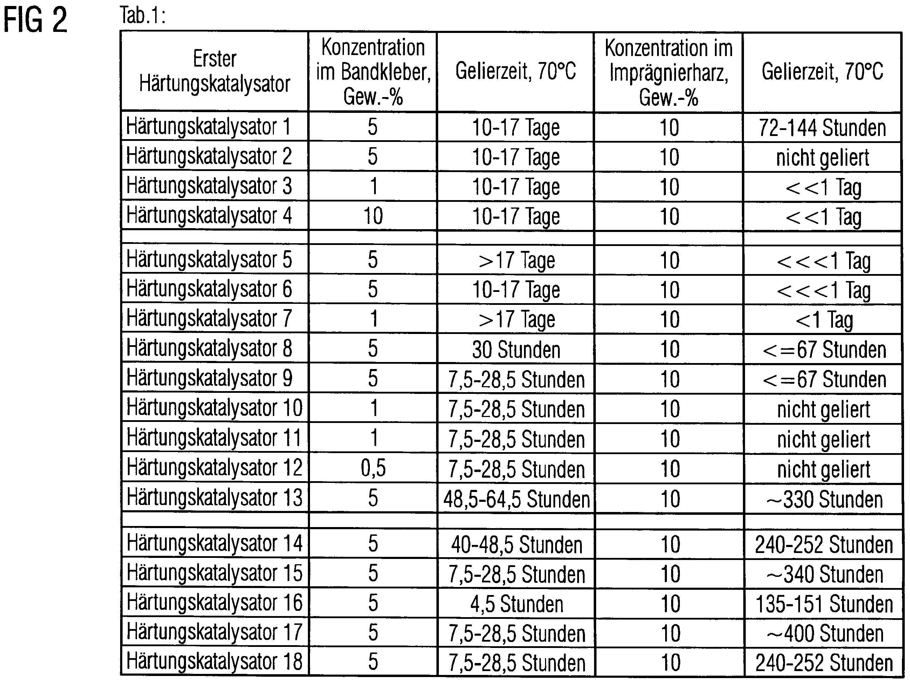

Es ist vorteilhaft, wenn als "erster Härtungskatalysator", gemeint ist der im festen Isolationswerkstoff vorliegende Härtungskatalysator, eine thermisch-aktivierbare Supersäure und/oder ein thermisch-aktivierbares Supersäurederivat, (blocked super acid) wie z.B. ein Komplex eines Tetrafluoroborats, Sulphoniumderivats, Hexafluoroantimonats und/oder eines Hexafluorophosphats als Vertreter der so genannten Supersäuren oder Supersäurensalze. Dabei haben beispielsweise Verbindungen mit quarternären, organischem Ammonium und/oder auch antimonfreie Verbindungen (Härtungskatalysatoren 5 bis 7) gute Ergebnisse geliefert, wie in Figur 2, Tabelle 1 zu erkennen ist.

Dabei werden die thermisch-aktivierbaren Supersäurenderivate beispielsweise mit einem Kronenether, wie beispielsweise Kronenether 15-Krone-5, und ähnliche, komplexiert. Ein beispielhafter Komplex lautet AgSbF₆.

Beispielsweise initiiert ein solcher erster Härtungskatalysator eine kationische, thermisch-getriebene Gelierung und Polymerisation des Imprägnierharzes im Bereich von 20°C bis 100°C.

Nach einer vorteilhaften Ausführungsform der Erfindung ist das Imprägnierharz ein cycloaliphatisches Epoxidharz, ausgewählt aus der Gruppe folgender Verbindungen: 7-Oxabicyclo[4.1.0]hept-3-ylmethyl-7-oxabicyclo[4.1.0]heptan-3-carboxylat; 2-(3,4-Epoxy)Cyclohexyl-5,5-spiro(3,4-Epoxy)-Cyclohexan-m-Dioxan; Bis(3,4-Epoxy-Cyclohexylmethyl)adipat; Bis(3,4-Epoxycyclohexyl)adipat; 4-(1,2-Epoxyethyl)-1,2-Epoxycyclohexan und/oder 3,4-Epoxycyclohexylmethyl-3',4'-epoxycyclohexancarboxylat, sowie beliebige Gemische und Abmischungen der oben gelisteten Verbindungen.

Typische Gehalte zur Gelierung cycloaliphatischen Epoxidharzes mit den genannten ersten Härtungskatalysatoren, die in dem festen Isolationswerkstoff enthalten sind, betragen sehr viel weniger als 1 Gew.-%, bezogen auf das cycloaliphatische Epoxidharz der Formulierung für das Imprägniermittel, das erst während des Vakuumprozesses mit diesem ersten Härtungskatalysator in Berührung kommt.

Nach einer Ausführungsform wird als cycloaliphatisches Epoxidharz das 3,4-Epoxycyclohexylmethyl-3',4'-epoxycyclohexancarboxylat eingesetzt, ein sehr dünnflüssiges Epoxidharz, das auch ohne Reaktionsverdünner eingesetzt werden kann und sich als sehr lagerstabil herausgestellt hat.

Die Erfindung betrifft weiterhin folgende Punkte:
1.Formulierung für ein Imprägniermittel zur Herstellung eines Isolationssystems mittels Vakuumimprägnierung, insbesondere VPI-Imprägnierung, die geeignet ist, einen festen Isolationswerkstoff mit einem Träger, einem Barrierewerkstoff und einem dazugehörigen Bandkleber, zu durchtränken, die dazu ein entsprechend niedrigviskoses Imprägnierharz, mit einer Viskosität von kleiner 1500 mPas, bevorzugt kleiner 500 mPas, besonders bevorzugt kleiner 150 mPas bei Imprägniertemperatur, umfasst, wobei
   das Imprägnierharz ein cycloaliphatisches Epoxidharz ist, das mit einem im festen Isolationswerkstoff deponierten ersten und/oder in der Formulierung des Imprägniermittels verteilten zweiten Härtungskatalysator reagiert, wobei der erste Härtungskatalysator, der vom festen Isolationswerkstoff stammt, sehr reaktiv auf die cycloaliphatischen Epoxidgruppen des cycloaliphatischen Epoxidharzes in der Formulierung des Imprägniermittels reagiert, aber gegenüber den funktionellen Gruppen des ebenfalls im festen Isolationswerkstoff enthaltenen Bandklebers ausreichend reaktionsträge ist, damit die Lagerstabilität des festen Isolationswerkstoffes gegeben ist, wobei der zweite Härtungskatalysator erst bei höheren Temperaturen, beispielsweise bei über 100°C, anspringt, so dass die Formulierung des Imprägniermittels ausreichende Lagerstabilität hat.
2. Formulierung eines Imprägniermittels nach Punkt 1, wobei das Epoxidharz ausgewählt ist aus der Gruppe folgender Verbindungen: 7-Oxabicyclo[4.1.0]hept-3-ylmethyl-7-oxabicyclo[4.1.0]heptan-3-carboxylat; 2-(3,4-Epoxy)Cyclohexyl-5,5-spiro(3,4-Epoxy)-Cyclohexan-m-Dioxan; Bis(3,4-Epoxy-Cyclohexylmethyl)adipat; Bis(3,4-Epoxycyclohexyl)adipat; 4-(1,2-Epoxyethyl)-1,2-Epoxycyclohexan und/oder 3,4-Epoxycyclohexylmethyl-3',4'-epoxycyclohexancarboxylat, sowie beliebige Gemische und Abmischungen der oben gelisteten Verbindungen.
3. Formulierung eines Imprägniermittels nach einem der Punkte 1 oder 2, wobei der zweite Härtungskatalysator in der Formulierung in einer Menge von 0 Gew% - 10 Gew%, insbesondere von 0.01 bis 7.5 Gew% und insbesondere bevorzugt in einem Gehalt von 0.1 bis 5 Gew%, bezogen auf das cycloaliphatische Epoxidharz vorliegt.
4. Formulierung eines Imprägniermittels nach einem der vorhergehenden Punkte, wobei der zweite Härtungskatalysator eine ionische Härtung initiiert.
5. Formulierung eines Imprägniermittels nach einem der vorhergehenden Punkte, wobei der zweite Härtungskatalysator eine Anspringtemperatur von >100°C, bevorzugt >120°C, besonders bevorzugt >140°C hat.
6. Formulierung eines Imprägniermittels nach einem der vorhergehenden Punkte, in der Additive und/oder Füllstoffe vorgesehen sind.
7. Formulierung eines Imprägniermittels nach einem der vorhergehenden Punkte, in der Nanopartikel vorgesehen sind.
8. Formulierung eines Imprägniermittels nach Punkt 7, wobei die Nanopartikel in der Formulierung dispergiert vorliegen.
9. Formulierung eines Imprägniermittels nach Punkt 7 oder 8, wobei die Nanopartikel in Form von polymeren Nanopartikel vorliegen.
10. Formulierung eines Imprägniermittels nach einem der Punkte 7 bis 9, wobei die Nanopartikel mit einem Partikeldurchmesser von kleiner 300 nm, insbesondere in einem Bereich von 5 bis 150 nm vorliegen.
11. Formulierung eines Imprägniermittels nach einem der Punkte 7 bis 10, wobei die Nanopartikel in einem Gehalt von 0.1 bis 35 Gew%, bevorzugt 0,5 bis 10 Gew%, besonders bevorzugt 1 bis 5 Gew% vorliegen.
12. Fester Isolationswerkstoff, der zusammen mit der Formulierung des Imprägniermittels zur Herstellung eines Isolationssystems in einem Vakuumimprägnierprozess einsetzbar ist, wobei dieser einen Träger, einen Barrierewerkstoff, einen ersten Härtungskatalysator und einen Bandkleber umfasst, wobei der Bandkleber inert ist gegenüber dem ersten Härtungskatalysator, der unter den Bedingungen der Vakuumimprägnierung mit den cycloaliphatischen Epoxidgruppen eines cycloaliphatischen Epoxidharzes, wie es in der Formulierung des Imprägniermittels nach einem der Punkte 1 bis 11 enthalten ist, mit Gelierzeiten von 1 bis 15h, bevorzugt 2 bis 12, besonders bevorzugt 2,5 bis 10h bei Imprägniertempertur reagiert.
13. Fester Isolationswerkstoff nach Punkt 12, in dem ein Träger in Form von Gewebe, Vlies, Papier und/oder in Form einer Folie vorliegt.
14. Fester Isolationswerkstoff nach Punkt 13, bei dem sich der Barrierewerkstoff an, in und/oder auf dem Träger befindet.
15. Fester Isolationswerkstoff nach einem der Punkte 12 bis 14, wobei der Barrierewerkstoff zumindest zum Teil partikelförmig ist.
16. Fester Isolationswerkstoff nach Punkt 15, wobei der Barrierewerkstoff zumindest zum Teil plättchenförmig vorliegt.
17. Fester Isolationswerkstoff nach einem der Punkte 12 bis 16, wobei der Bandkleber in Form eines Glycidyletherepoxidharzes mit Repetiereinheiten von n = 0 bis n = 50, bevorzugt von n = 1 bis n = 30, besonders bevorzugt von n = 2 bis n = 18 vorliegt.
18. Fester Isolationswerkstoff nach einem der Punkte 12 bis 17, wobei der Bandkleber in Form eines Epoxy-Novolaks und/oder Epoxy-Phenol-Novolaks mit Funktionalitäten n= 0,1 bis 8, vorliegt.
19. Fester Isolationswerkstoff nach einem der Punkte 12 bis 18, wobei der Bandkleber in Form Diolen, Triolen und/oder Polyolen vorliegt.
20. Fester Isolationswerkstoff nach einem der Punkte 12 bis 19, wobei der Bandkleber in einer Menge von 1 bis 30 Gew%, bevorzugt 2 bis 15 Gew%, besonders bevorzugt 5 bis 10 Gew% vorliegt.
21. Fester Isolationswerkstoff nach einem der Punkte 12 bis 20, wobei der erste Härtungskatalysator in einer Konzentration von 0,001 Gew% bis 7,5 Gew%, beispielsweise im Bereich von 0,001 bis 5 Gew%, insbesondere von 0,001 Gew% bis 2 Gew%, und bevorzugt von 0,001 Gew% bis 1 Gew% im festen Isolationswerkstoff vorliegt.
22. Fester Isolationswerkstoff nach einem der Punkte 12 bis 21, wobei der erste Härtungskatalysator in Form einer Supersäure und/oder eines Supersäurenderivats vorliegt.
23. Fester Isolationswerkstoff nach Punkt 22, wobei die Supersäure einen pKs-Wert von kleiner -3 hat.
24. Fester Isolationswerkstoff nach einem der Punkte 12 bis 23, wobei der erste Härtungskatalysator in Form einer thermisch-aktivierbaren Supersäure vorliegt.
25. Fester Isolationswerkstoff nach einem der Punkte 21 bis 24, wobei der erste Härtungskatalysator in Form einer latent wirkenden Supersäure vorliegt.
26. Fester Isolationswerkstoff nach einem der Punkte 12 bis 25, wobei der erste Härtungskatalysator bei einer Temperatur im Bereich von 20°C bis 100°C, bevorzugt von 50°C bis 80°C und insbesondere bevorzugt von 55°C bis 75°C anspringt.
27. Fester Isolationswerkstoff nach einem der Punkte 21 bis 26, wobei der erste Härtungskatalysator in Form eines Komplexes eines Supersäure Fluoro-Anions mit einem Kronenether vorliegt.
28. Fester Isolationswerkstoff nach Punkt 27, wobei der erste Härtungskatalysator in Form eines Komplexes eines Silber-Hexafluoroantimonats mit einem 15-Krone-5 Kronenether vorliegt.
29. Fester Isolationswerkstoff nach einem der Punkte 12 bis 28, wobei der erste Härtungskatalysatoren im gehärteten Imprägniermittel im Isolationssystem eine Glasübergangstemperatur größer 110°C erreicht.
30. Verwendung eines durch Vakuumimprägnierung mit einem festen Isolationswerkstoff nach einem der Punkte 12 bis 29 und einer Formulierung eines Imprägniermittels nach einem der Punkte 1 bis 11 hergestellten Isolationssystems in Mittel- und Hochspannungsmaschinen, insbesondere rotierende elektrische Maschinen im Mittel- und Hochspannungsbereich sowie in elektrischen Schaltanlagen, Mittel- und Hochspannungsanwendungen, Durchführungen, Transformatordurchführungen, Generatordurchführungen und/oder HGÜ-Durchführungen, sowie in entsprechenden Halbzeugen.
31. Elektrischen Maschinen, bevorzugt rotierende elektrische Maschinen, besonders bevorzugt rotierende elektrische Maschinen im Mittel- und Hochspannungsbereich sowie elektrische Schaltanlagen, Mittel- und Hochspannungsanwendungen, Durchführungen, Transformatordurchführungen, Generatordurchführungen und/oder HGÜ-Durchführungen, sowie entsprechende Halbzeuge, die ein Isolationssystem, hergestellt mit einer Formulierung nach einem der Punkte 1 bis 11 und/oder einem festen Isolationswerkstoff nach einem der Punkte 12 bis 29, umfassen.

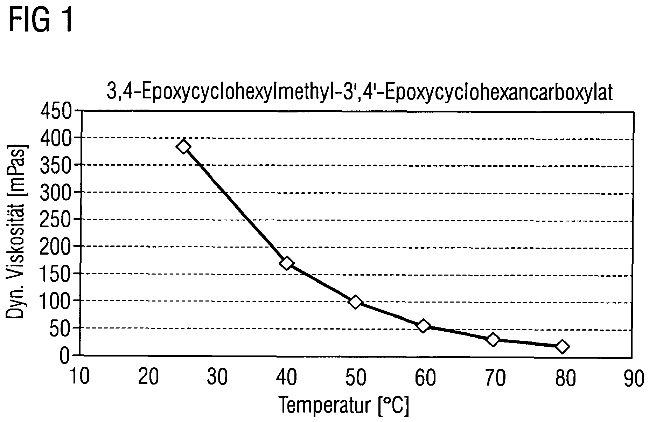

In Figur 1 ist eine Graphik zu sehen, die die temperaturabhängige, dynamische Viskosität des cycloaliphatischen Epoxidharzes 3,4-Epoxycyclohexylmethyl-3',4'-epoxycyclohexancarboxylat zeigt.

Zur Erreichung einer geforderten Lagerstabilität im festen Isolationswerkstoff, beispielsweise bei Raumtemperatur und insbesondere bei mehreren Stunden andauernder Vakuumvorhalte- und Imprägniertemperatur, ist der erste Härtungskatalysator vergleichsweise inert zum Bandklebermaterial. Dies insbesondere auch unter den Bedingungen der Vakuumvorhalte- und/oder Imprägniertemperatur, die beispielsweise im Bereich zwischen 25°C und 100°C liegt, insbesondere zwischen 50°C bis 80°C, am bevorzugtesten zwischen 55°C bis 75 °C. Beispielsweise geeignet sind Bandklebermaterialien, deren Hauptkomponente nur 1,2-Oxiran-Epoxidgruppen aufweisen.

In Figur 2 ist Tabelle 1 zu sehen, in der die Reaktivität des Bandklebers zu verschiedenen ersten Härtungskatalysatoren zusammengefasst ist. Es wurden Verbindungen identifiziert, die eine relativ kurze Gelierzeit in cycloaliphatischem (Imprängierharz), aber eine relativ hohe Lagerstabilität in 1,2-Oxirangruppen-Epoxidharz (Bandkleber) aufweisen.

Beispielsweise die als Härtungskatalysator 5 bis 7 eingesetzten thermisch-aktivierbaren Supersäuren sind im Stande, cycloaliphatisches Epoxidharz außerordentlich rasch bei 70°C zu gelieren, sind jedoch äußerst inert gegenüber herkömmlichen 1,2-Oxirangruppenhaltigen Epoxidharzen, die als Bandklebermaterialien im Glimmerband Verwendung finden. So liefert da eine beispielhaft eingesetzte blockierte Supersäure mit einer Konzentration von 0,02% im 3,4-Epoxycyclohexylmethyl-3',4'-epoxycyclohexancarboxylat eine Gelierzeit von ∼10h bei 70°C, wobei eine Konzentration von 2,5% in einem destilliertem Bisphenol-F-Diglycidylether auch nach 5000h bei 70°C nicht zu einer Gelierung führt.

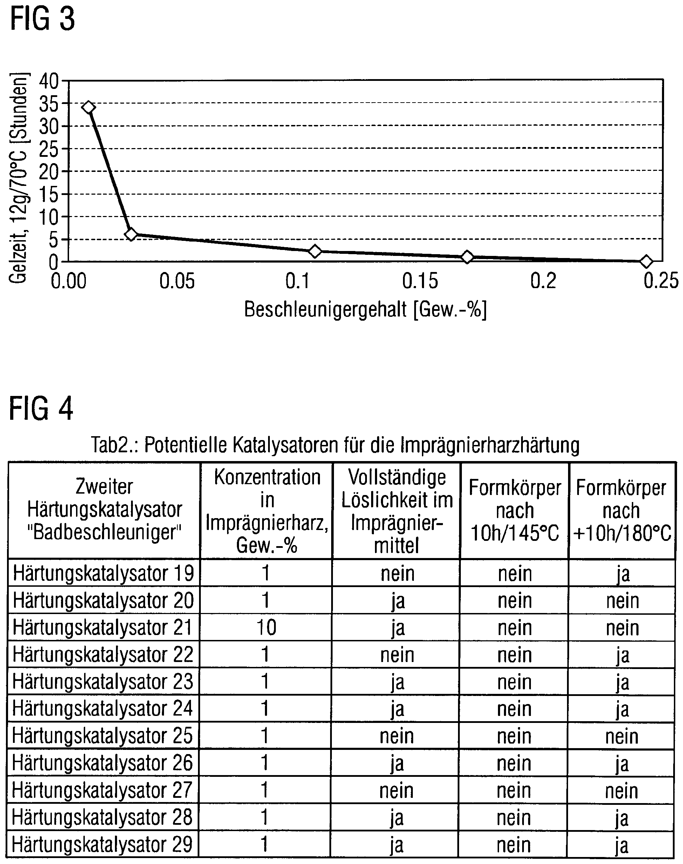

Figur 3 zeigt die Gelierzeiten (12g, 70°C) dieser Härtungskatalysatoren in einem cycloaliphatischen Oxiran. Zu erkennen ist, dass die Reaktivität dieser Katalysatortypen, zwar in dem Bandkleber, dem 1,2-Oxiran-Epoxidharz, sehr gering, dafür aber im cycloaliphatischen Epoxidharz, dem Imprägnierharz, sehr hoch ist, so dass sehr geringe Gehalte an Härtungskatalysator ausreichend sind.

Damit eröffnet sich die Möglichkeit, sehr geringe Gehalte von erstem Härtungskatalysator im Bereich von 0,001-1 Gew% in den festen Isolationswerkstoffen, wie den Glimmerbändern, zu deponieren. Dadurch ergeben sich praktisch keine negativen Reaktivitäten mit dem Bandkleber, insbesondere wenn im festen Isolationswerkstoff ein Bandkleber auf Basis der 1,2-Oxiran-Epoxidharze und/oder Epoxy-Phenol-Novolake enthalten ist.

Nach einem Vakuumimprägniervorgang führt dieser geringe Gehalt an erstem Härtungskatalysator zum Gelieren bei der Tränkung. Ein anschließendes, thermisches Aushärten bei praxisnahen Härtungstemperaturen, also etwa 10h bei 145°C bis 180°C, führt zu klaren, lunker- und blasenfreien Formstoffen ausreichender Steifigkeit, aber sehr hoher Glasübergangstemperaturen von 160°C und mehr.

Weiterhin besteht die Möglichkeit, einen trägeren, also beispielsweise mit Anspringtemperaturen um die 100°C, zusätzlichen Härtungskatalysator im Imprägniermittel ("Bad-Härtungskatalysator"), als Ergänzung zum Band-Härtungskatalysator in den Glimmerbändern zu deponieren. Auf diese Weise kann sichergestellt werden, dass vom Band-Härtungskatalysator nicht ausreichend katalysierte Imprägnierharzteile z.B. in abgeschlossenen Falten des applizierten Glimmerbandes eine Härtung während des späteren Temperungsprozesses erfahren. Diese Kombination ermöglicht die gewünschte Gelierung innerhalb vorgegebener Zeiten sowie die vollständige Polymerisation des gesamten, möglicherweise bandkatalysatorunerreichten Imprägnierharzes. Dazu sollten die potentiellen Badbeschleuniger freilich löslich sein im cycloaliphatischen Epoxidharz.

Figur 4 zeigt in Tabelle 2 eine Liste der Verbindungen, die als zweite Härtungskatalysatoren, also als so genannte Bad-Härtungskatalysatoren, weil sie im flüssigen Isolationsmittel enthalten sind, beispielsweise eingesetzt werden.

Das Isolationssystem gemäß der vorliegenden Erfindung kann beliebige Additive umfassen, die beispielsweise die Färbung, die Bruchfestigkeit, die Risszähigkeit, Sprödigkeit etc. des Isolationssystems im fertig gehärteten Zustand beeinflussen.

Beispielsweise ist das gehärtete, cycloaliphatische Epoxidharz ein sehr spröder Werkstoff, dem zur Erhöhung der Bruchresistenz und/oder zur Erhöhung der Bruchdehnung Additive zugesetzt werden. Hier kann beispielsweise der Zusatz von flexibilisierenden Hilfsmittel, wie langkettiger Polyole, beispielswiese Polypropylenglykol, vorteilhaft sein.

Zum Beibehalten einer hohen Glasübergangstemperatur ist es beispielsweise vorteilhaft, Nanopartikel, insbesondere polymere Nanopartikel, als Additive einzusetzen. Die Nanopartikel erhöhen sehr wirkungsvoll die Bruchdehnung und bruchmechanische Eigenschaftskennwerte bei nahezu vergleichbaren Glasübergangsbereichen.

Besonders vorteilhaft ist zu diesem Zwecke die teilweise und/oder vollständige Verwendung von Nanopartikel-in-Cycloaliphat-EP-Masterbatches, wie z.B. Polybutadien-Core-Shell-Partikel, 90 bis 110nm, agglomeratfrei, diese Partikel sind z.B. mittels TEM nachweisbar.

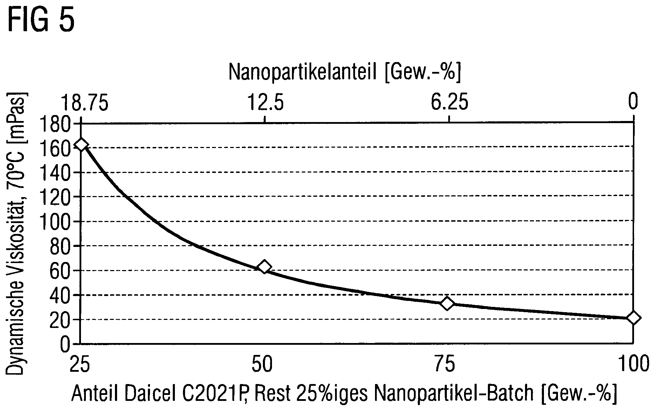

Diese Masterbatches enthalten 25-33 Gew.-% polymere Nanopartikel und können pur oder in Abmischung mit dem Epoxidharz verwandt werden, wie in Figur 5 gezeigt.

Die genannten ersten Härtungskatalysatoren sind (nahezu) chemisch inert in Bezug auf die herkömmlichen Epoxidharze auf Glycidyletherbasis , beispielsweise auch Epoxy-Phenol-Novolake, die als Bandkleber Verwendung finden und fungieren somit als hochwirksame, lagerstabile erste Härtungskatalysatoren im festen Isolationswerkstoff.

Die cycloaliphatischen Epoxidharze des Typs 3,4-Epoxycyclohexylmethyl-3',4'-Epoxycyclohexancarboxylat, die gemäß einer Ausführungsform der Erfindung als Imprägnier- oder Tränkharz dienen, weisen niedrige dynamischen Viskositäten auf und erlauben die Durchtränkung zahlreicher Glimmerbandlagen, insbesondere beim Generatorbau. Desweiteren bilden sie bei der Polymerisation, initiiert durch den Härtungskatalysator sehr hohe Glasübergangstemperaturen aus.

Ein mit den oben beschriebenen Komponenten im Vakuumimprägnierverfahren hergestelltes Isolationssystem kann mit dem bisher gebräuchlichen Isolationssystem aus Bisphenol-A-Diglycidylether EPR162 und Methylhexahydrophthalsäureanhydrid EPH868 bezüglich des Glasübergangs von größer 150°C (10h/145°C) mithalten.

Durch die erfindungsgemäße Kombination eines hochwirksamen, inerten ersten Härtungskatalysators im festen Isolationswerkstoff mit dem hoch fließfähigen cycloaliphatischen Epoxidharz gelingt die Einstellung hoher Glasübergangstemperaturen ohne den Einsatz von Säureanhydriden. Dieser erste Härtungskatalysator oder ein in das cycloaliphatische Epoxidharz reaktionsträgerer zweiter Härtungskatalysator Härten das Säureanhydrid-freie Isolationssystem aus, wobei vergleichbare Tgs erhalten werden.

Dieser zweite Härtungskatalysator im Imprägniermittel sorgt im Verbund mit dem ersten Härtungskatalysator für die sichere, vollständige Durchhärtung des gesamten Imprägniermittels. Dieser zweite Härtungskatalysator führt mit geringen Anteilen zur Härtung, insbesondere bevorzugt im Bereich 0.1-5 Gew.-%, bezogen auf das reine cycloaliphatische Epoxidharz. Zur Erhöhung der Bruchresistenz bzw. Bruchdehnung kann eine teilweise Zumischung von polymeren Nanopartikeln in das cycloaliphatische EpoxidharzImprägnierharz, bevorzugt in Form von Nanopartikelmasterbatches mit identischer Epoxidharzmatrix, zweckdienlich sein. Ebenso denkbar ist eine Verstreckung mit dem Fachmann bekannten Flexibilisatoren auf Basis langkettiger Diole, wie Polypropylenglycole ö.ä.

Die Erfindung betrifft ein Isolationssystem, insbesondere eine mittels Vakuumimprägnierung, bevorzugt VPI-Prozess imprägnierte Wickelbandisolierung, insbesondere für die Anwendung in Mittel- und Hochspannungsmaschinen, insbesondere rotierende elektrischen Maschinen im Mittel- und Hochspannungsbereich. Aber auch für Mittel- und Hochspannungsdurchführungen wie beispielsweise Transformator-, Generator- und/oder HGÜ-Durchführungen, sowie in entsprechenden Halbzeugen für elektrische Schaltanlagen. Zur Optimierung der Durchtränkung des festen Isolationswerkstoffs wird ein cycloaliphatisches Epoxidharz als Basis für die Formulierung des Imprägniermittels eingesetzt, dabei werden Anpassungen im festen Isolierwerkstoff, z.B. im Glimmerband, in Bezug auf den Härtungskatalysator und den Bandkleber erforderlich.

## Patentansprüche

1. Fester Isolationswerkstoff, der zusammen mit einer Formulierung eines Imprägniermittels zur Herstellung eines Isolationssystems in einem Vakuumimprägnierprozess einsetzbar ist, wobei der Isolationswerkstoff einen Träger, einen Barrierewerkstoff aus plättchenförmigem Glimmer, einen ersten ionisch-wirkenden Härtungskatalysator und einen Bandkleber umfasst, wobei der Bandkleber in Form eines Epoxy-Novolaks und/oder Epoxy-Phenol-Novolaks mit Funktionalitäten n= 0,1 bis 8 vorliegt und inert ist gegenüber dem ersten Härtungskatalysator, der in Form einer Supersäure und/oder eines Supersäurenderivats vorliegt und unter den Bedingungen der Vakuumimprägnierung mit cycloaliphatischen Epoxidgruppen eines Imprägniermittels wie es in der Formulierung des Imprägniermittels enthalten ist, mit Gelierzeiten von 1 bis 15 h, bevorzugt 2 bis 12 h, besonders bevorzugt 2,5 bis 10h bei einer Imprägniertemperatur reagiert.

2. Fester Isolationswerkstoff nach Anspruch 1, in dem der Träger in Form von Gewebe, Vlies, Papier und/oder in Form einer Folie vorliegt.

3. Fester Isolationswerkstoff nach Anspruch 2, bei dem sich der Barrierewerkstoff an, in und/oder auf dem Träger befindet.

4. Fester Isolationswerkstoff nach einem der Ansprüche 1 bis 3, wobei der Bandkleber in Form von Diolen, Triolen und/oder Polyolen vorliegt.

5. Fester Isolationswerkstoff nach einem der Ansprüche 1 bis 4, wobei der Bandkleber in einer Menge von 1 bis 30 Gew%, bevorzugt 2 bis 15 Gew%, besonders bevorzugt 5 bis 10 Gew% vorliegt.

6. Fester Isolationswerkstoff nach einem der Ansprüche 1 bis 5, wobei der erste Härtungskatalysator in einer Konzentration von 0,001 Gew% bis 7,5 Gew%, beispielsweise im Bereich von 0,001 bis 5 Gew%, insbesondere von 0,001 Gew% bis 2 Gew%, und bevorzugt von 0,001 Gew% bis 1 Gew% im festen Isolationswerkstoff vorliegt.

7. Fester Isolationswerkstoff nach einem der Ansprüche 1 bis 6, wobei die Supersäure einen pKs-Wert von kleiner -3 hat.

8. Fester Isolationswerkstoff nach einem der Ansprüche 1 bis 7, wobei der erste Härtungskatalysator in Form einer thermisch-aktivierbaren Supersäure und/oder eines thermisch-aktivierbaren Supersäurederivats vorliegt.

9. Fester Isolationswerkstoff nach Anspruch 8, wobei die thermisch-aktivierbare Supersäure und/oder das thermisch-aktivierbare Supersäurederivat ein Komplex eines Tetrafluoroborats, Sulphoniumderivats, Hexafluoroantimonats und/oder eines Hexafluorophosphats und/oder eine Verbindung mit quarternären, organischem Ammonium und/oder eine antimonfreie Verbindung ist.

10. Fester Isolationswerkstoff nach einem der Ansprüche 1(6!) bis 9, wobei der erste Härtungskatalysator in Form einer latent wirkenden Supersäure vorliegt.

11. Fester Isolationswerkstoff nach einem der Ansprüche 1 bis 10, wobei der erste Härtungskatalysator bei einer Temperatur im Bereich von 20°C bis 100°C, bevorzugt von 50°C bis 80°C und insbesondere bevorzugt von 55°C bis 75°C anspringt.

12. Fester Isolationswerkstoff nach einem der Ansprüche 1(6!) bis 11, wobei der erste Härtungskatalysator in Form eines Komplexes eines Supersäure Fluoro-Anions, insbesondere eines Silber-Hexafluoroantimonats, mit einem Kronenether, insbesondere mit einem 15-Krone-5 Kronenether, vorliegt.

13. Fester Isolationswerkstoff nach einem der Ansprüche 1 bis 12, wobei der erste Härtungskatalysatoren im gehärteten Imprägniermittel im Isolationssystem eine Glasübergangstemperatur größer 110°C erreicht.

14. Verwendung eines durch Vakuumimprägnierung mit einem festen Isolationswerkstoff nach einem der Ansprüche 1 bis 13 und einer Formulierung eines Imprägniermittels hergestellten Isolationssystems in Mittel- und Hochspannungsmaschinen, insbesondere rotierende elektrische Maschinen im Mittel- und Hochspannungsbereich sowie in elektrischen Schaltanlagen, Mittel- und Hochspannungsanwendungen, Durchführungen, Transformatordurchführungen, Generatordurchführungen und/oder HGÜ-Durchführungen, sowie in entsprechenden Halbzeugen.

15. Elektrischen Maschinen, bevorzugt rotierende elektrische Maschinen, besonders bevorzugt rotierende elektrische Maschinen im Mittel- und Hochspannungsbereich sowie elektrische Schaltanlagen, Mittel- und Hochspannungsanwendungen, Durchführungen, Transformatordurchführungen, Generatordurchführungen und/oder HGÜ-Durchführungen, sowie entsprechende Halbzeuge, die ein Isolationssystem, hergestellt mit einem festen Isolationswerkstoff nach einem der Ansprüche 1 bis 13, umfassen.
